# EUROPEAN PATENT APPLICATION

(11) **EP 4 249 383 A2**
(43) Date of publication of application: **27.09.2023**
(21) Application number: 23184965.4
(22) Date of filing: 15.11.2019
(51) Int. Cl.: B65B 55/20

(54) **PACKAGING PRODUCT AND METHODS OF MAKING AND USING FOR BOX-LINING**

(30) Priority: 16.11.2018 US 201862768173 P
(62) Divisional of application: 19817528.3
(71) Applicant: Ranpak Corp., Concord Township, OH 44077 (US)
(72) Inventor: THOMAS, Lawrence B., Tampa 33629 (US); WARHOLIC, Michael Dane, Streetsboro 44241 (US)
(74) Representative: Potter Clarkson

(57) **Abstract**

A dunnage product has a length dimension with a first end and a second end opposite the first end. A plurality of segments are distributed along the length dimension between the first end and the second end, including an uncrumpled segment of uncrumpled sheet stock material. The uncrumpled segment is positioned between at least one randomly-crumpled segment of randomly-crumpled sheet stock material on each side of the uncrumpled segment. The uncrumpled segment facilitates easier insertion of the dunnage product into a container and allows for layering a crossing dunnage product without increasing the thickness of the products in the area of overlap.

## Description

### Field of the Invention

The present invention is related to a packaging product, and more particularly to dunnage product for lining a shipping container and a corresponding method of making the dunnage product.

### Background

Dunnage conversion machines convert a stock material into a dunnage product that can be used to pack articles in a shipping container and thus minimize or prevent damage during shipment. Dunnage conversion machines, also referred to as dunnage converters, generally include a conversion assembly that converts the stock material into a relatively lower-density dunnage product as the stock material moves through the conversion assembly from an inlet at an upstream end toward an outlet at a downstream end.

Exemplary dunnage conversion machines already in use convert a sheet stock material, such as kraft paper, into a dunnage product that can then be placed into a container to protect articles being shipped. Paper is a desirable stock material that is biodegradable, recyclable, and composed of a renewable resource. Such dunnage conversion machines typically convert a substantially continuous length of sheet stock material into a strip of dunnage, from which discrete lengths of dunnage product are severed for placement in a container by a packer in a desired configuration. The dunnage product also may provide insulation properties.

### Summary

To facilitate quickly lining a container with dunnage products, it may be desirable to bundle dunnage products that can be readily un-bundled to line the container with protective and/or insulating dunnage material. For example, two strips of crumpled dunnage product are laid out orthogonal to each other and pressed into the bottom of a shipping container. The overlapping strips cover the bottom of the container and excess lengths of the two strips run up the four walls of the container. After the container is filled with cargo, the lengths of the strips may be folded over the top of the cargo to cover a top side of the cargo, if the strips are long enough to do so.

This arrangement of two strips of crumpled dunnage product layered orthogonal to each other doubles the lining thickness of the bottom of the shipping container, whereby the thickness of the lining is not uniform and available volume for cargo is reduced. The aesthetics of the finished package also may be perceived as unpleasant if the two strips of crumpled dunnage product do not lay neatly on top of each other. Placing the crumpled dunnage product in the shipping container is a labor-intensive effort that consumes time during the packaging process. The structure of a crumpled dunnage product necessitates an operator to push down the dunnage product into the container. Even further, crumpled segments of dunnage product have a lower yield (e.g., meters of dunnage product produced per meter of sheet stock material consumed) than uncrumpled segments.

The present invention provides a strip of dunnage that may be easily assembled with other packing materials in a shipping container, provides uniform thickness in shipping container lining, provides optimal space for cargo, is more appealing to the end-user, is more easily inserted into a container thus requiring less time and effort to prepare the container to receive its cargo, and has a higher yield than other dunnage products, which may lead to cost reduction.

More particularly, the present invention provides a dunnage product or strip of dunnage having a length dimension with a first end and a second end opposite the first end. A plurality of segments are distributed along the length dimension of the dunnage product between the first end and the second end, including an uncrumpled segment of uncrumpled sheet stock material. The uncrumpled segment is positioned between at least one randomly-crumpled segment of randomly-crumpled sheet stock material on each side of the uncrumpled segment.

One of the at least one randomly-crumpled segment may be located at the first end of the dunnage product and another of the at least one randomly-crumpled segment is located at the second end of the dunnage product.

The uncrumpled segment may include a center of the dunnage product.

The plurality of segments may include alternating segments of randomly-crumpled sheet stock material and uncrumpled sheet stock material.

The thickness of the randomly-crumpled sheet stock material may be greater than the thickness of the uncrumpled sheet stock material.

The dunnage product may include at least two plies of sheet stock material.

At least one ply of the at least two plies of sheet stock material may include the randomly-crumpled sheet stock material.

The plies may be connected along at least one longitudinally-extending connecting band to hold the at least two plies of sheet stock material together.

The sheet stock material may include paper.

The present invention also provides a method for converting sheet stock material into a relatively lower density dunnage product. The method includes the steps of: (a) advancing a sheet stock material lengthwise through a conversion assembly and randomly crumpling a first segment of the sheet stock material to form a first randomly-crumpled segment of a strip of dunnage; and then (b) temporarily advancing the sheet stock material through the conversion assembly without randomly crumpling the sheet stock material to form an uncrumpled segment of the strip of dunnage; and then (c) resuming advancing the sheet stock material through the conversion assembly while randomly crumpling a second segment of the sheet stock material to form a second randomly-crumpled segment of the strip of dunnage material.

The randomly crumpling step may include (i) retarding the passage of the sheet stock material downstream of a feed assembly portion of the conversion assembly by passing the sheet stock material at a second rate that is less than the first rate to cause the sheet stock material to randomly crumple; and (ii) connecting multiple plies of sheet stock material, including connecting a crumpled first ply of sheet stock material to one side of a second ply of sheet stock material, to hold the crumpled first ply in its crumpled state.

The method for converting sheet stock material into a relatively lower density dunnage product may further include cutting the second randomly-crumpled segment of the strip of dunnage to sever a discrete dunnage product from the strip of dunnage.

The present invention also provides a bundled dunnage product. The bundled dunnage product includes at least two strips folded into a compact bundle. A top strip includes randomly-crumpled sheet stock material. The top strip has a length dimension with a first end and a second end opposite the first end. A plurality of segments are distributed along the length dimension between the first end and the second end. A bottom strip has a length dimension with a first end and a second end opposite the first end. A plurality of segments are distributed along the length dimension of the bottom strip between the first end and the second end, including an uncrumpled segment of uncrumpled sheet stock material. The uncrumpled segment of the bottom strip is positioned between at least one randomly-crumpled segment of randomly-crumpled sheet stock material on each side of the uncrumpled segment. The top strip overlays the uncrumpled segment of the bottom strip and the length dimension of the top strip is oriented orthogonal to the length dimension of the bottom strip. The first and second ends of the top strip are folded over one of the plurality of segments of the top strip, and the first and second ends of the bottom strip are folded over the uncrumpled segment of the bottom strip.

A center of the top strip may be off-center relative to a center of the bottom strip.

The bundled dunnage product may further include a restraining member to temporarily secure the strips of packing material in the bundled configuration.

The present invention also provides a method of making a bundled dunnage product from two strips of dunnage product. The method includes the steps of: (a) providing two strips of packing material, including a top strip including randomly crumpled paper, the top strip having a length dimension with a first end and a second end opposite the first end, and a plurality of segments distributed along the length dimension between the first end and the second end; and a bottom strip having a length dimension with a first end and a second end opposite the first end, and a plurality of segments distributed along the length dimension between the first end and the second end, including an uncrumpled segment of uncrumpled sheet stock material between at least one randomly-crumpled segment of randomly-crumpled sheet stock material on each side of the uncrumpled segment; (b) placing the top strip over the uncrumpled segment of the bottom strip such that the length dimension of the top strip is orthogonal to the length dimension of the bottom strip; (c) folding the first end and the second end of the top strip one of the plurality of segments of the top strip; and (d) folding the first end and the second end of the bottom strip over the uncrumpled segment of the bottom strip.

The providing step may include selecting strips of packing material based on one or more of the following factors: (a) a width dimension of the strip relative to a width of a respective side wall of a container; (b) a length dimension of the strip of packing material of the strip of packing material relative to a length of the respective side wall of the container; (c) a length dimension of the uncrumpled segment of the strip relative to a bottom wall of the container; (d) insulating properties of the strip; and (e) cushioning properties of the strip.

The present invention also provides a method of using the bundled dunnage product. The method includes: (a) providing a rectangular packing container with an open top side and a closed bottom side opposite the top side; (b) placing the bundled dunnage product in the packing container with a bottom side of the uncrumpled segment of the bottom strip against an inner surface of the bottom side of the packing container; and (c) unfolding the first end and the second end of the top strip and the bottom strip against respective side walls of the packing container.

The method of using the bundled dunnage product may further include the step of releasing the bundle from a temporary restraining member.

The method of using the bundled dunnage product may further include the step of placing an article to be packed on a top side of the top strip, and folding respective first ends and second ends of the top strip and the bottom strip over the article, and closing the open top side of the packing container.

The foregoing and other features of the invention are hereinafter fully described and particularly pointed out in the claims, the following description and annexed drawings setting forth in detail certain illustrative embodiments of the invention, these embodiments being indicative, however, of but a few of the various ways in which the principles of the invention may be employed.

### Brief Description of the Drawings

FIG. 1A is a schematic view of a shipping container containing a pair of strips of dunnage.
FIG. 1B is a schematic view of the conventional arrangement of overlapping strips of crumpled dunnage product lining the bottom of the shipping container of FIG. 1A.
FIG. 1C is a schematic view of the arrangement of strip of dunnage product including a segment of crumpled dunnage overlapping a segment of uncrumpled dunnage of another strip of dunnage product accordance with the present invention lining the bottom of the shipping container of FIG. 1A.
FIG. 2 is a schematic representation of an exemplary dunnage conversion machine.
FIG. 3 is a schematic view of an exemplary dunnage product provided by the present invention.
FIG. 4 is a schematic plan view of another exemplary dunnage product provided by the present invention.
FIG. 5 is a schematic cross-section of the strip of dunnage as seen along line 5-5 of FIG. 4.
FIG. 6 is a partial schematic cross-section of the strip of dunnage as seen along line 5-5 of Fig. 4 including an overlapping strip of dunnage.
FIG. 7 is a schematic diagram of two strips of dunnage placed over an open shipping container.
FIG. 8 is a diagram of a sequential folding operation for a pair of strips in a "T" configuration.
FIG. 9 is a diagram of a sequential folding operation for a pair of strips in a "cross" configuration.
FIGS. 10-16 illustrate sequential steps of a folding operation for a pair of strips in a "T" configuration to form a bundled dunnage product.
FIGS. 17-20 illustrate sequential steps for using a bundled dunnage product to prepare a shipping container for receipt of one or more articles for packing in the shipping container.

### Detailed Description

The present invention provides a dunnage product, a method of making the dunnage product, a bundled dunnage product including the exemplary dunnage product, a method for making the bundled dunnage product, and a method for using the bundled dunnage product to prepare a shipping container to receive one or more articles to be shipped in the container. The method of use best illustrates the advantages provided by the invention, but before describing the method, the dunnage product itself will be described.

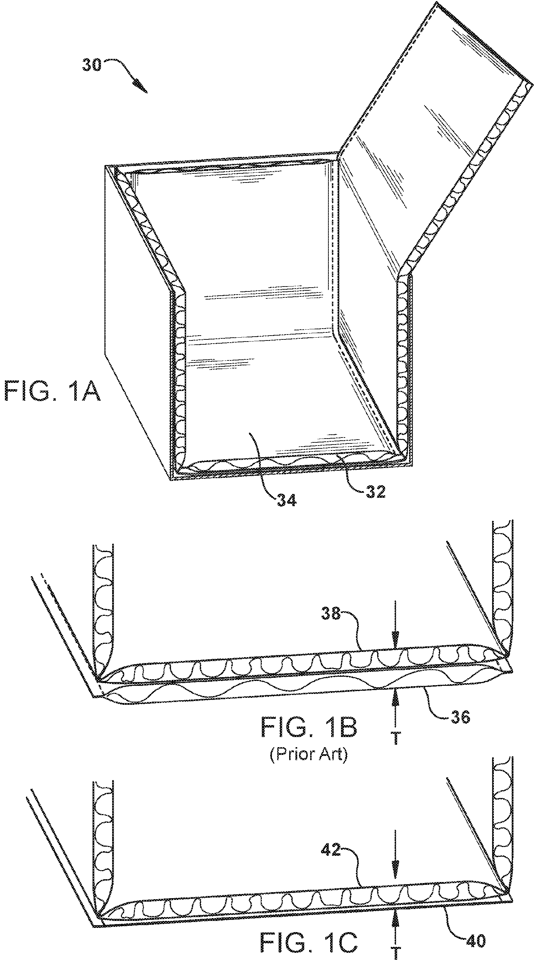

The dunnage product provided by the invention, which also may be referred to as a liner or lining for a shipping container, facilitates assembly and insertion and provides a more uniform lining thickness with other packing materials in a shipping container. For example, in FIG. 1A, two strips 32, 34 of dunnage product are laid out orthogonal to each other and pressed into the bottom of a shipping container 30. The overlapping strips 32, 34 cover the bottom of the container and extend up along respective side walls. In the conventional arrangement, two overlapping strips 36, 38 of crumpled dunnage product layered orthogonal to each other double the lining thickness T at the bottom of the shipping container (FIG. 1B), whereby the thickness T of the lining is not uniform and available volume for cargo is reduced. In FIG. 1C, an uncrumpled segment of a first dunnage product 40 underlies a crumpled segment of a second dunnage product 42 in accordance with the present invention. This arrangement of a crumpled segment overlapping an uncrumpled segment ensures uniform lining thickness t, is easier to insert into the container, provides optimal space for cargo, and is more appealing to the end user. Due to the inclusion of uncrumpled segments, the dunnage product of the present invention also has a higher yield than other dunnage products, which also may lead to cost reduction.

As mentioned above, an exemplary dunnage product provided by the present invention may be produced by a dunnage conversion machine that converts a sheet stock material into a dunnage product that is relatively thicker and less dense than the stock material. An exemplary machine for converting sheet stock material into an exemplary dunnage product provided by the present invention is disclosed in International Patent Application Publication No. WO 2009/042664, which is hereby incorporated by reference. That exemplary dunnage conversion machine produces a wrappable dunnage product, but the present invention is not limited to that dunnage product or the illustrated dunnage conversion machine.

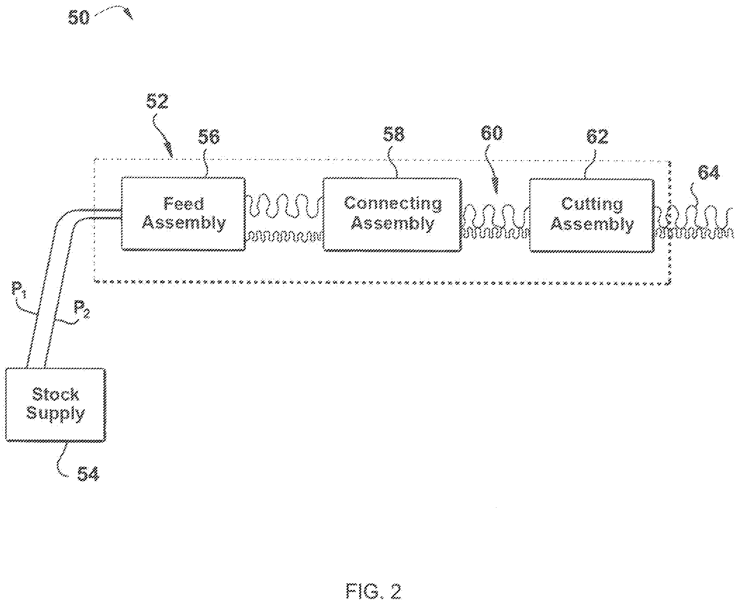

Referring now to FIG. 2, an exemplary dunnage conversion machine 50 includes a conversion assembly 52 for converting a stock material into a relatively lower density strip of dunnage. The conversion assembly 52 includes both a feed assembly 56 that draws one or more plies P₁ and P₂ of sheet stock material lengthwise from a supply 54 of the sheet stock material, and a connecting assembly 58 downstream from the feed assembly 56 that connects multiple overlapping layers of sheet material together to form a strip of dunnage 60. The conversion machine 50 also may include a cutting assembly 62 downstream of the connecting assembly 58 to sever lengths of discrete dunnage product 64 from the continuous strip 60.

A suitable sheet stock material includes paper or plastic sheets or a combination thereof. Paper is an environmentally-responsible choice for a sheet stock material because it is generally recyclable, reusable, and composed of a renewable resource. An exemplary sheet stock material for use in the conversion machine includes either a single-ply or multi-ply kraft paper provided either in roll form or as a series of connected, alternately-folded, rectangular pages in a fan-folded stack. The supply of sheet stock material may include multiple rolls or stacks to provide the plies or webs of sheet stock material for conversion into the dunnage product, and subsequent supplies may be spliced to trailing ends of preceding rolls or stacks to provide a continuous length of sheet stock material to the dunnage conversion machine 50.

To produce the exemplary dunnage product as described below, the conversion assembly 52 longitudinally randomly crumples the sheet stock material to increase its protective and/or insulating properties. In an exemplary conversion assembly 52, the connecting assembly 58 passes the plies P₁ and P₂ therethrough at a slower rate than the rate at which the plies P₁ and P₂ are fed from the feed assembly 56 to and through the connecting assembly 58. The connecting assembly 58 thereby cooperates with the feed assembly 56 to cause the stock material to randomly longitudinally crumple or fold in a confined space extending longitudinally between the feed assembly 56 and the connecting assembly 58. Although the exact variation in the crumpled undulations is unpredictable, the amplitude and frequency of the undulations generally can be approximately predicted statistically, and is the result of the differential speed of the feed assembly 56 and the connecting assembly 58, and the size of the space through which the sheet stock material travels (FIG. 2). The connecting assembly 58 connects the crumpled sheet to another sheet to hold the crumpled sheet in its crumpled state in a continuous strip of dunnage 60. The another sheet may be a crumpled sheet that also passes through the feed assembly 56 or an uncrumpled sheet that bypasses the feed assembly 56.

An exemplary dunnage product as described below includes a crumpled segment of randomly-crumpled sheet stock material on each side of an uncrumpled segment. To produce the uncrumpled segment of the exemplary dunnage product, the conversion assembly 52 may be configured to temporarily pass sheet stock material without imparting longitudinal crumpling. In the exemplary conversion assembly 52, the feed assembly 56 may be disengaged, whereby the connecting assembly 58 draws one or both plies past the inactive feed assembly 56. Alternatively, the feed assembly 56 may pass one or both plies at the same or a slower rate than the connecting assembly 58 to minimize or eliminate longitudinal crumpling in a segment of the strip of dunnage 60. In another alternative, the connecting assembly 58 may pass one or both plies at a rate as fast or faster than the rate at which the plies P₁ and P₂ are fed from the feed assembly 56 to the connecting assembly 58. With any of these techniques, crumpling is reduced or eliminated in a segment of the sheet stock material while in effect. This reducedcrumpling or uncrumpled segment is flatter and has less cushioning than a randomly-crumpled segment of the sheet stock material.

At least one ply of the dunnage product 64 thus includes randomly-crumpled segments and uncrumpled segments. Randomly-crumpled segments provide cushioning properties to the dunnage product 64. The crumpled segments are held in the crumpled state, for example along connecting bands, which may be formed from lines of mechanical interconnection between two or more sheets formed by the connecting assembly. The lines of connections where the multiple overlaid sheets or plies are held together also can provide convenient fold lines. Uncrumpled segments of the dunnage product provide an area which may be overlaid with a randomly-crumpled segment of another dunnage product such that the dunnage products lay neatly on top of each other.

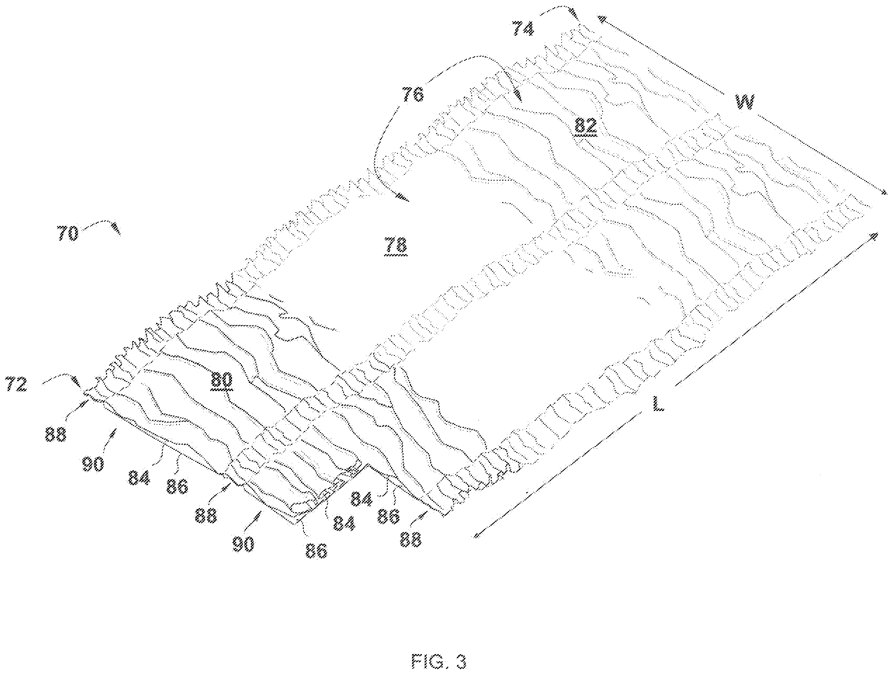

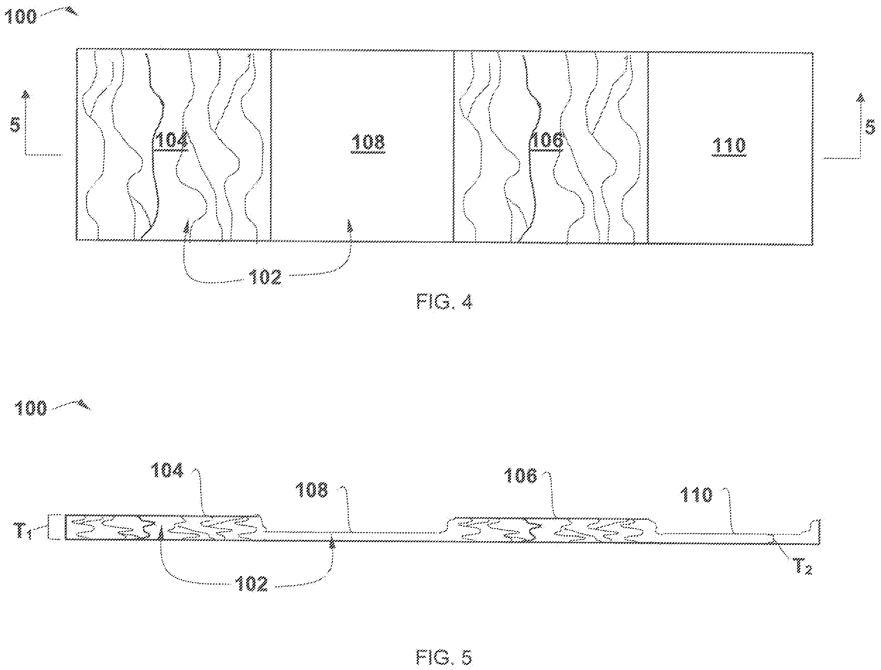

An exemplary dunnage product 70, shown in FIG. 3, has a length dimension L with a first end 72 and a second end 74 opposite the first end 72. Dunnage products may have varying lengths, and may have insulating, cushioning, or some combination of such properties. The dunnage products typically have a length dimension L that is greater than a width dimension W, and both the width dimension W and the length dimension L are greater than a thickness direction T₁ or T₂ (FIG. 5). While the length of the dunnage products may vary, the length typically is long enough to extend across a corresponding dimension of a shipping container. The dunnage product may have a length that is sufficient to extend across or beyond one or more upright side walls and a bottom wall of the container. If a width dimension of the inside surface of the container is greater than a width dimension of a dunnage product, multiple adjacent dunnage products extending in a common direction may be provided.

One dunnage product 70 has a plurality of segments 76 distributed along the length dimension L between the first end 72 and the second end 74, including an uncrumpled segment 78 that lies between the first end 72 and the second end 74. The uncrumpled segment 78 may include a center of the dunnage product 70. The center of the dunnage product 70 is halfway between respective first end 72 and second end 74.

The uncrumpled segment 78 is positioned between at least one randomly-crumpled segment 80, 82 of randomly-crumpled sheet stock material on each side of the uncrumpled segment 78. In FIG. 3, one of the at least one randomly-crumpled segments 80 is located at the first end 72 of the dunnage product 70. Another of the at least one randomly-crumpled segments 82 is located at the second end 74 of the dunnage product 70.

As shown in FIGS. 4 and 5, in another dunnage product 100, the plurality of segments 102 includes alternating segments of randomly-crumpled sheet stock material 104, 106 and uncrumpled sheet stock material 108, 110. As illustrated, the segments of randomly-crumpled sheet stock material 104, 106 may have generally the same length as the segments of uncrumpled sheet stock material 108, 110. The segments of randomly-crumpled sheet stock material 104, 106 may have different lengths as compared to the segments of uncrumpled sheet stock material 108, 110. Each segment of randomly-crumpled sheet stock material may have the same or different length as compared to other segments of randomly-crumpled sheet stock material. Each segment of uncrumpled sheet stock material may have the same or different length as compared to other segments of uncrumpled sheet stock material. The length of each of the plurality of segments may correspond to a length of a respective side wall or bottom wall of a shipping container.

As shown in FIG. 5, the thickness T₁, of the segments of randomly-crumpled sheet stock material 104, 106 is greater than the thickness T₂ of the segments of uncrumpled sheet stock material 108, 110.

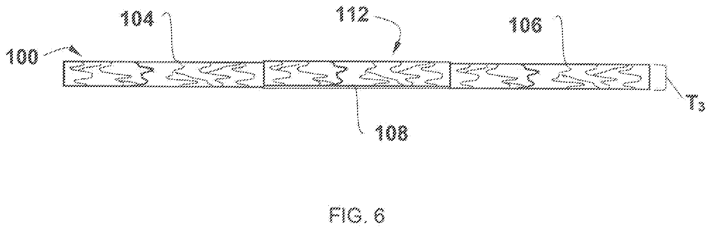

As shown in FIG. 6, a randomly-crumpled segment of a dunnage product 112 overlaps the uncrumpled segment 108 of another dunnage product 100. The relatively small thickness of the uncrumpled segment 108 provides for neat overlapping of the randomly crumpled segment on top of the uncrumpled segment 108 such that the combined configuration has a uniform thickness T₃ throughout.

Referring back to FIG. 3, the dunnage product includes at least two plies 84, 86 of sheet stock material. A first ply 84 includes the randomly-crumpled segments 80, 82 and the uncrumpled segment 78. A second ply 86 is uncrumpled. The dunnage product 70 includes at least one, and preferably a plurality, of laterally-spaced, longitudinally-extending connecting bands 88 where the sheet stock material is embossed or pierced or punched or otherwise mechanically interconnected by the connecting assembly to hold the multiple plies 84, 86 of stock material together. The stock material generally is compressed in these connecting bands 88 and thus the randomly-crumpled segments 80, 82 of the crumpled plies 84 provide greater loft in cushioning regions 90 outside the connecting bands 88. The uncrumpled ply 86 acts as a carrier for the crumpled ply 84. The random crumpling of the randomly-crumpled segments 80, 82 of the crumpled ply or plies 84 and the laterally-spaced connecting bands 88 holding the uncrumpled ply or plies 86 to the crumpled ply or plies 84 provides a high-quality dunnage product.

Changing the number of randomly-crumpled segments or sheets, the weight of the stock material employed, or the use of either a crumpled or an uncrumpled carrier sheet may be used to vary the cushioning, insulating, or other properties of the dunnage product. Cushioning properties also can be controlled by changing a ratio of the feed rate of the stock material through the feed assembly 56 and the connecting assembly 58 (FIG. 2).

While the dunnage products 70 produced by such a conversion machine described above are particularly suitable for use as a lining for a shipping container, as described above, the dunnage products 70 also may provide desirable cushioning and thermal insulation properties. The use of a dunnage conversion machine allows dunnage products to be produced on-demand, as necessary or desirable.

The bundled dunnage product, which also may be referred to as a bundle, includes at least two strips of the exemplary dunnage product and facilitates placement of multiple dunnage products in a container simultaneously and in a proper orientation relative to each other, such as for providing cushioning or thermal insulation properties for lining a shipping container. The bundled dunnage products are readily unbundled to line the container, whereupon the container is ready to receive the articles to be shipped. Unbundling the bundled dunnage products arranges the dunnage products along the inside surfaces of the container to provide the desired cushioning, thermal, or other dunnage properties.

The dunnage product of the present invention may be provided in a bundled configuration with one or more additional dunnage products to facilitate inserting multiple dunnage products into a container at one time, ready to be deployed to a desired configuration where the dunnage products are ready to receive and protect articles for shipment. To provide for easy insertion into a shipping container and to avoid doubling the lining thickness of the shipping container during the use of the bundled configuration, an uncrumpled segment of the dunnage product of the present invention is placed over or under a crumpled segment of another dunnage product to lie against a bottom or other common surface inside the shipping container. In such a configuration, uniform thickness of the lining is achieved while still providing protection and/or insulation by a crumpled segment of one of the dunnage products.

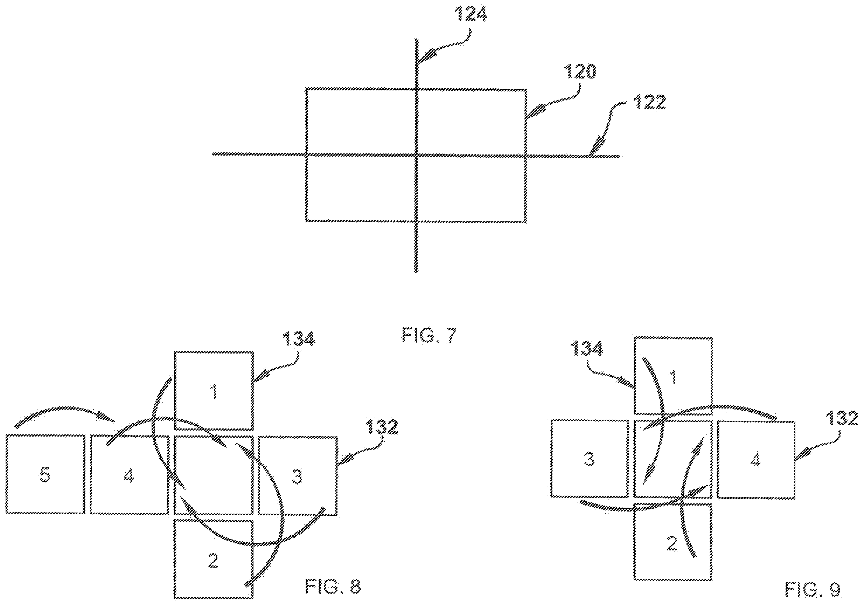

Turning now to FIG. 7, a typical rectangular shipping container 120 may be provided with a first strip of dunnage (or dunnage product) 122 placed in a first position across a bottom surface inside the shipping container 120 and generally perpendicular to parallel opposing side walls of the shipping container 120. A second strip or dunnage product 124 may be provided across the shipping container perpendicular to the first strip 122. The ends of the first and second strips 122, 124 generally extend out of the shipping container 120, over respective side walls, such that an article to be shipped can be placed on top of the first strip 122 and the second strip 124 and pressed into the shipping container 120, if the first strip 122 and the second strip 124 have not already been pushed downward, or otherwise positioned adjacent the bottom surface of the shipping container 120. Then, the ends of the first strip 122 and the second strip 124 may be folded inwardly over the overlapping segments of the first strip 122 and the second strip 124, which overlap each other and the bottom surface of the shipping container 120, and over or around the article being shipped. The container 120 then may be closed and otherwise prepared for shipment.

The dunnage conversion machine 50 (FIG. 2) may be controlled to automatically produce a series of dunnage products, including the first and second strips 122 and 124 described above, upon an appropriate signal, such as an operator input or an automatic signal to begin producing dunnage. One of the first and second strips 122 or 124 may be produced by the dunnage conversion machine 50, and then the other of the first and second strips 122 or 124 may be produced automatically without further input or delay. A sensor may be located at a certain point along the production path of the dunnage conversion machine 50. The sensor may send the automatic signal to begin producing one of the first and second strips 122 or 124 when the other of the first and second strips 122 or 124 reaches the certain point along the production path or is removed by an operator. And if multiple first or second strips 122 or 124 or a combination thereof are required, the dunnage conversion machine 50 may be controlled to produce the desired combination without further input. In other words, the dunnage conversion machine 50 may include a predetermined set of instructions to produce the desired combination of these types of strip dunnage products 122 and 124 needed to line a particular container.

Before the present invention, layering and bundling of two strips of crumped dunnage products unnecessarily doubled the thickness of the dunnage products provided on the bottom side of the container 120 and was difficult to insert into the container 120. The present invention also provides a method of folding the first strip 122 and the second strip 124 to form a bundle that provides for uniform lining thickness when unbundled within the container 120 to a configuration ready to receive the article to be shipped.

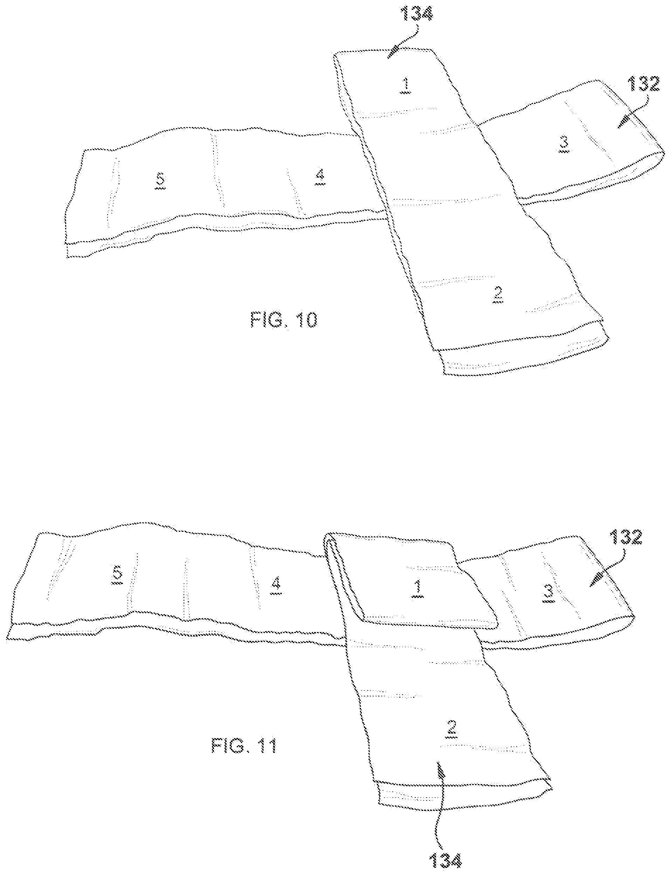

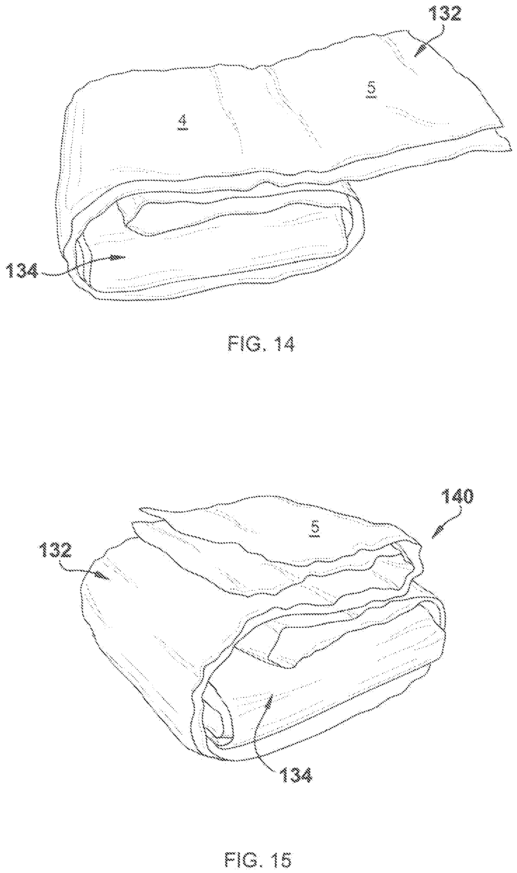

In the first step of bundling the strips, the first strip and the second strip may be arranged to form either a "T" configuration (FIG. 8) or a "cross" configuration (FIG. 9). For ease of description, referring to FIG. 8, a formation of a bundle from the T configuration includes the following steps (also shown sequentially with FIGS. 10-15). First, a second strip 134 is placed perpendicular to a first strip 132, with a central segment of the second strip 134 overlapping a central segment of the first strip 132. The central segment of the first strip 132 is an uncrumpled segment. The central segment of the second strip 134 is a randomly-crumpled segment. The strips may be secured together. For comparison, in the cross configuration, a center of the second strip 134 overlays a center of a first strip 132, whereas in the T configuration the center of the second strip 134 is offset from and does not overlay the center of the first strip 132. In other words, in the T configuration, the center of the second strip 134 is off-center relative to the center of the first strip 132, closer to one end of the first strip 132. In either configuration, a randomly-crumpled segment of the second strip 134 overlays an uncrumpled segment of the first strip 132.

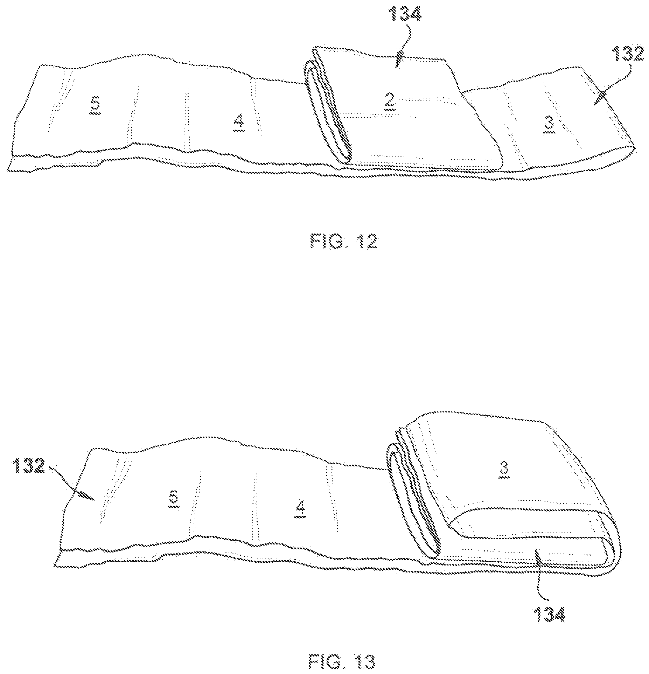

Referring to FIG. 8, each strip is separated into sections, and respective sections of the first strip 132 and the second strip 134 are folded over the unmarked central segment of the second strip 134. The order may vary, but in this example, the sections are folded over the unmarked central segment of the second strip 134 in sequential order of reference numbers (1)-(5). More particularly, a first section (1) of the second strip 134 is folded over the unmarked central segment of the second strip 134 and the underlying central segment of the first strip 132, and then a second section (2) of the second strip 134 is folded over the unmarked central segment of the second strip 134, and also over the previously-folded first section (1) of the second strip 134. See Figs. 10-12. Next, the third section (3) of the first strip 132 is folded over the unmarked central segment of the second strip 134 (and the underlying central segment of the first strip 132 and the previously inwardly-folded first section (1) and second section (2) of the second strip 134). Finally, the fourth section (4) and the fifth section (5) of the first strip 132 are folded over and around the central segment of the first strip 132 (and the previously-folded first through third sections) to form a bundle 140 (see FIGS. 13-15). The ends of the strips may be interleaved in the bundle 140. If any sections are longer than the unmarked central segment of the second strip 134, those sections may extend beyond and around the unmarked section.

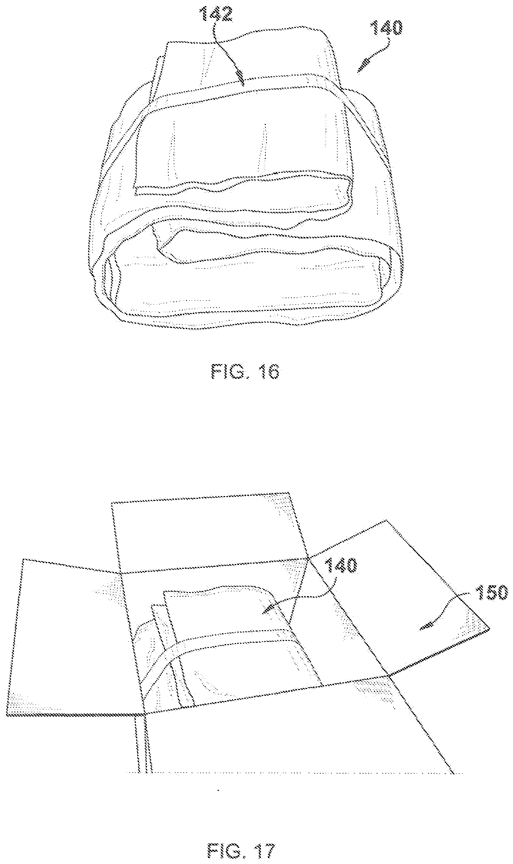

The resulting folded bundle 140 may be placed in a container for use directly, or may be stored, ready for later use. As shown in FIG. 16, the bundle 140 may also include a bailing strap 142, or other restraining member or means for holding or securing the first strip 132 and the second strip 134 in the bundled configuration. An exemplary bailing strap 142 is made of paper, with an adhesive securing overlapping ends of the strap 142.

Referring now to FIG. 9, and reference numbers (1)-(4), formation of a bundle from the cross configuration includes similar steps. First, the second strip 134 is placed perpendicular to the first strip 132, with the center of the second strip 134 place over the center of the first strip 132. Then, sections of the first strip 132 and the second strip 134 are folded over the unmarked central segment of the second strip 134 in sequential order of reference numbers (1)-(4), with subsequent sections folding over previous sections and around the unmarked central segment of the second strip 134, to form a bundle from the two strips 132 and 134.

Each of these methods may vary the order in which the various sections would be folded inward. The size of the bundle preferably is correlated to the size of the packing container and the packaging requirements needed for that container. Factors to consider include the desired properties, whether insulating or cushioning or a combination thereof; the size of the container; the size of the articles being shipped; and the size of the dunnage products in the bundle. Thus, as noted above, two or more strips may be folded into a compact bundle for simultaneous placement in a container, with multiple strips aligned in a common direction, side-by-side, employed to cover container walls that are wider than a single strip. Accordingly, the bundle may include one or multiple first strips, along with one or multiple second strips, as needed for a particular container. Regardless of the number of strips, the resulting bundle makes it very easy for an operator to place multiple strips in a container at once. The bundled arrangement also facilitates the placement of the strips against the inside surface of the container as the strips are unfolded from the bundle. The bundled arrangement also ensures uniform lining thickness throughout the container.

The present invention also provides a method for using the bundle to quickly place the dunnage products in a container in a configuration suitable for receiving an article to be shipped. The method includes the following steps, illustrated in FIGS. 17-20, using the bundle 140 from the T configuration described above. First, the bundle 140 (whether secured or unsecured) is placed into a container 150, and any tape, strap, or banding used to hold the strips 132 and 134 in the bundled configuration, if any, is released and removed. Next, the bundling method, whether the T configuration, the cross configuration, or other configuration, would be reversed, opening the first and second strips within the container by unfolding the various sections in reverse order, potentially extending over the sides and outside of the container as sections of the first and second strips are unfolded and placed in a configuration ready to receive one or more articles for shipment, as shown sequentially in FIGS. 17-20.

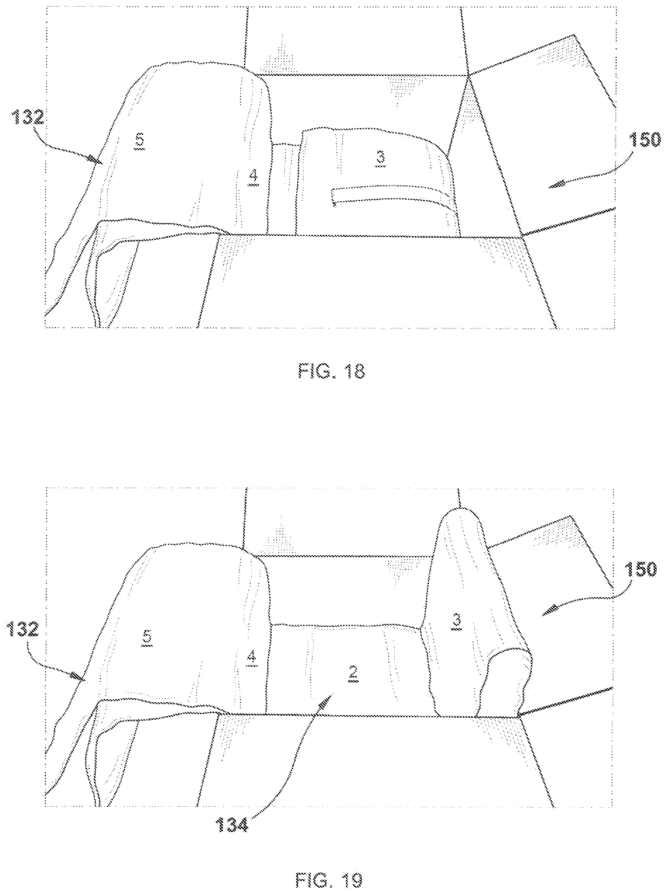

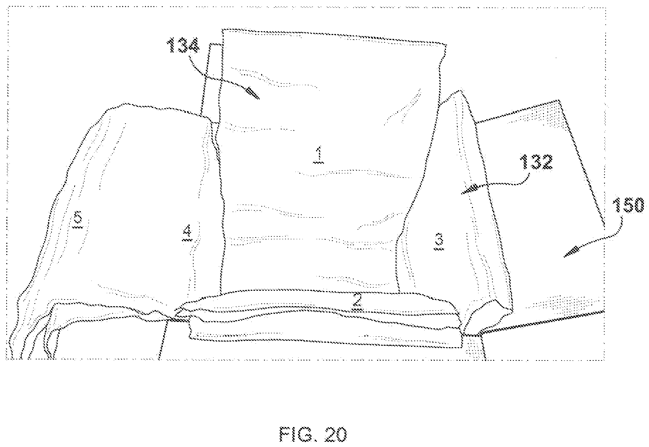

After the bundle 140 is placed into the container 150 against an inside surface of a bottom wall (FIG. 17), sections 4 and 5 of the first strip 132 are unfolded and placed over an adjacent inside surface of an upright side wall of the shipping container 150 (FIG. 18). Section 3 of the first strip 132 is unfolded against an opposite inside surface of an opposing upright side wall. Then, sections 2 and 1 of second strip 134 are sequentially unfolded against respective opposing inside surfaces of orthogonal upright side walls of the container 150 in a similar manner. See FIGS. 19 and 20. The container 150 is thus ready to receive articles to be shipped, and simply unfolding the bundle places the first and second strips 132 and 134 in the desired configuration.

Subsequently, the respective sections may be folded over a top of the articles to cover and protect all sides of the articles during shipment. Alternatively or additionally, one or more additional strips may be provided on top of or around the articles before the container is closed, to provide additional protection.

In summary, the present invention provides a dunnage product or strip of dunnage having a length dimension with a first end and a second end opposite the first end. A plurality of segments are distributed along the length dimension between the first end and the second end, including an uncrumpled segment of uncrumpled sheet stock material. The uncrumpled segment is positioned between at least one randomly-crumpled segment of randomly-crumpled sheet stock material on each side of the uncrumpled segment.

Although the invention has been shown and described with respect to a certain illustrated embodiment or embodiments, equivalent alterations and modifications will occur to others skilled in the art upon reading and understanding the specification and the annexed drawings. In particular regard to the various functions performed by the above described integers (components, assemblies, devices, compositions, etc.), the terms (including a reference to a "means") used to describe such integers are intended to correspond, unless otherwise indicated, to any integer which performs the specified function (i.e., that is functionally equivalent), even though not structurally equivalent to the disclosed structure which performs the function in the herein illustrated embodiment or embodiments of the invention.

Embodiments of the invention will now be described in the following numbered paragraphs.
1. A dunnage product comprising, a length dimension with a first end and a second end opposite the first end, and a plurality of segments distributed along the length dimension between the first end and the second end, including an uncrumpled segment of uncrumpled sheet stock material between at least one randomly-crumpled segment of randomly-crumpled sheet stock material on each side of the uncrumpled segment.
2. A dunnage product as set forth in paragraph 1, where one of the at least one randomly-crumpled segment is located at the first end of the dunnage product and another of the at least one randomly-crumpled segment is located at the second end of the dunnage product.
3. A dunnage product as set forth in paragraph 1 or paragraph 2, where the uncrumpled segment includes a center of the dunnage product.
4. A dunnage product as set forth in paragraph 1 or any of paragraphs 1 to 3, where the plurality of segments includes alternating segments of randomly-crumpled sheet stock material and uncrumpled sheet stock material.
5 A dunnage product as set forth in paragraph 1 or any of paragraphs 1 to 4, where the thickness of the randomly-crumpled sheet stock material is greater than the thickness of the uncrumpled sheet stock material.
6. A dunnage product as set forth in paragraph 1, or any of paragraphs 1 to 5, where the dunnage product includes at least two plies of sheet stock material.
7. A dunnage product as set forth in paragraph 6, where at least one ply of the at least two plies of sheet stock material includes the randomly-crumpled sheet stock material.
8. A dunnage product as set forth in paragraph 6 or paragraph 7, where the plies are connected along at least one longitudinally-extending connecting band to hold the at least two plies of sheet stock material together.
9. A dunnage product as set forth in paragraph 1 or any of paragraphs 1 to 8, where the sheet stock material includes paper.
10. A method for converting sheet stock material into a relatively lower density dunnage product, comprising the steps of: advancing a sheet stock material lengthwise through a conversion assembly and randomly crumpling a first segment of the sheet stock material to form a first randomly-crumpled segment of a strip of dunnage; and then temporarily advancing the sheet stock material through the conversion assembly without randomly crumpling the sheet stock material to form an uncrumpled segment of the strip of dunnage; and then resuming advancing the sheet stock material through the conversion assembly while randomly crumpling a second segment of the sheet stock material to form a second randomly-crumpled segment of the strip of dunnage material.
11. A method as set forth in paragraph 10, where the randomly crumpling steps include: retarding the passage of the sheet stock material downstream of a feed assembly portion of the conversion assembly by passing the sheet stock material at a second rate that is less than the first rate to cause the sheet stock material to randomly crumple; and connecting multiple plies of sheet stock material, including connecting a crumpled first ply of sheet stock material to one side of a second ply of sheet stock material, to hold the crumpled first ply in its crumpled state.
12. The method as set forth in paragraph 10 or paragraph 11, further including cutting the second randomly-crumpled segment of the strip of dunnage to sever a discrete dunnage product from the strip of dunnage.
13. A bundled dunnage product, comprising: at least two strips folded into a compact bundle, including, a top strip including randomly-crumpled sheet stock material, the top strip having a length dimension with a first end and a second end opposite the first end, and a plurality of segments distributed along the length dimension between the first end and the second end; and a bottom strip including the dunnage product as set forth in paragraph 1 or any of paragraphs 1 to 9; where the top strip overlays the uncrumpled segment of the bottom strip and the length dimension of the top strip is oriented orthogonal to the length dimension of the bottom strip, and the first and second ends of the top strip are folded over one of the plurality of segments of the top strip, and the first and second ends of the bottom strip are folded over the uncrumpled segment of the bottom strip.
14. A bundled dunnage product as set forth in paragraph 13, where a center of the top strip is off-center relative to a center of the bottom strip.
15. A bundled dunnage product as set forth in paragraph 13 or paragraph 14, further including a restraining member to temporarily secure the strips of packing material in the bundled configuration.
16. A method of making a bundled dunnage product from two strips of dunnage product, comprising the steps of: providing two strips of packing material, including a top strip including randomly crumpled paper, the top strip having a length dimension with a first end and a second end opposite the first end, and a plurality of segments distributed along the length dimension between the first end and the second end; and a bottom strip including the dunnage product as set forth in paragraph 1 or any of paragraphs 1 to 9; placing the top strip over the uncrumpled segment of the bottom strip such that the length dimension of the top strip is orthogonal to the length dimension of the bottom strip; folding the first end and the second end of the top strip one of the plurality of segments of the top strip; and folding the first end and the second end of the bottom strip over the uncrumpled segment of the bottom strip.
17. A method as set forth in paragraph 16, where the providing step includes selecting strips of packing material based on one or more of the following factors: (a) a width dimension of the strip relative to a width of a respective side wall of a container; (b) a length dimension of the strip of packing material of the strip of packing material relative to a length of the respective side wall of the container; (c) a length dimension of the uncrumpled segment of the strip relative to a bottom wall of the container; (d) insulating properties of the strip; and (e) cushioning properties of the strip.
18. A method of using the bundled dunnage product as set forth in paragraphs 13 or any of paragraphs 13 to 15, comprising the following steps:
   providing a rectangular packing container with an open top side and a closed bottom side opposite the top side; placing the bundled dunnage product in the packing container with a bottom side of the uncrumpled segment of the bottom strip against an inner surface of the bottom side of the packing container; unfolding the first end and the second end of the top strip and the bottom strip against respective side walls of the packing container.
19. A method as set forth in paragraph 18, further comprising the step of releasing the bundle from a temporary restraining member.
20. A method as set forth in paragraph 18 or 19, further comprising the step of placing an article to be packed on a top side of the top strip, and folding respective first ends and second ends of the top strip and the bottom strip over the article, and closing the open top side of the packing container.

## Claims

1. A method for converting sheet stock material into a relatively lower density dunnage product, comprising the steps of:
advancing a sheet stock material lengthwise through a conversion assembly and randomly crumpling a first segment of the sheet stock material to form a first randomly-crumpled segment of a strip of dunnage; and then
temporarily advancing the sheet stock material through the conversion assembly without randomly crumpling the sheet stock material to form an uncrumpled segment of the strip of dunnage; and then
resuming advancing the sheet stock material through the conversion assembly while randomly crumpling a second segment of the sheet stock material to form a second randomly-crumpled segment of the strip of dunnage material.

2. A method as set forth in claim 1, where the randomly crumpling steps include:
retarding the passage of the sheet stock material downstream of a feed assembly portion of the conversion assembly by passing the sheet stock material at a second rate that is less than the first rate to cause the sheet stock material to randomly crumple; and
connecting multiple plies of sheet stock material, including connecting a crumpled first ply of sheet stock material to one side of a second ply of sheet stock material, to hold the crumpled first ply in its crumpled state.

3. The method as set forth in claim 1 or claim 2, further including cutting the second randomly-crumpled segment of the strip of dunnage to sever a discrete dunnage product from the strip of dunnage.
